# EUROPEAN PATENT APPLICATION

(11) **EP 3 632 820 A1**
(43) Date of publication of application: **08.04.2020**
(21) Application number: 18805943.0
(22) Date of filing: 21.05.2018
(51) Int. Cl.: B65F 1/14, G01F 23/296, G01D 11/24

(54) **DEVICE FOR MEASURING THE FILL STATUS OF CONTAINERS**

(30) Priority: 23.05.2017 ES 201730719
(71) Applicant: Winttec World, S.L., 08005 Barcelona (ES)
(72) Inventor: SANCHEZ DURAN, Daniel, 08005 Barcelona (ES)
(74) Representative: Toro Gordillo, Ignacio Maria
(86) International application number: PCT/ES2018/070367
(87) International publication number: WO 2018/215683

(57) **Abstract**

Unlike volume sensors installed to detect the fill status in waste containers, which include a single ultrasound sensor, possibly leading to readings that do not correspond to the true load status if the load is not uniformly distributed, the device of the invention includes two or more ultrasound sensors (5) used to take multiple readings and ensure the calculation of a reliable fill volume of the container, also allowing said volume to be detected in real time by means of the inclusion of a radio-frequency communication system and/or GSM communication system under an interrogation protocol by means of which the waste collection process can be optimised and the costs associated with this task can consequently be minimised.

## Description

### OBJECT OF THE INVENTION

The present invention relates to a device for measuring the fill status or volume of containers, intended primarily to be applied in urban waste containers in order to allow the services for collecting said waste to optimise the collection of the waste such that it is carried out when the container is as full as possible for optimising transport.

The object of the invention is to provide a device which allows obtaining effective readings that are as realistic as possible with respect to the true load of the container for optimising the process of collecting said waste.

### BACKGROUND OF THE INVENTION

In the scope of practical application of the invention, a number of devices are known which measure by means of ultrasound the level of waste in containers, such that based on said measurements it can be determined if it is necessary to send a waste collection vehicle to collect it or if, in contrast, it is unnecessary to send said vehicle, thus attempting to optimise travel and fuel consumption and prevent the operation of collecting the waste if it is unnecessary, which is particularly relevant in high-density routes.

Sensors of this type of sensors are based on the following features:
Grid or storage cell power supply.

Distance measurements by a single ultrasound transducer or by an ultrasound transmitter and receiver.

Number of specific measures per day.

Sending the information by radio-frequency and/or GSM.

The fundamental problem with devices of this type is that the load of the container is not arranged homogeneously, that is, if any waste protrudes considerably from the contained waste level, the reading, or better yet, the false reading that is sent corresponds to the highest point of said protruding waste, or that which bounces off other waste, where the system thus assumes that the container is much fuller than what it really is, causing the waste to be collected prematurely and therefore inefficiently.

Likewise, devices of this type do not allow knowing in real time the fill status of the containers with waste to be collected as it takes periodic and preprogrammed measurements.

### DESCRIPTION OF THE INVENTION

The proposed device for measuring the fill status of containers solves in a fully satisfactory manner the problems set forth above in the different mentioned aspects and is applicable both to underground containers and to surface containers, and even to semi-underground containers of any type, receptacles, chambers, etc.

To that end and more specifically, the device is formed by a body with a casing that is highly resistant both to corrosion and to mechanical stresses to which it will be subjected, such that the casing internally includes electrically powered storage cells duly protected in a leak-tight compartment and that can be changed, the casing including two or more ultrasound sensors which, combined with a radio-frequency communication system and/or GSM communication system and with support of the appropriate software and hardware, allows knowing in real time the fill level of the container in order to assess whether it is necessary to collect said waste according to the data provided by the ultrasound sensors to the control system installed in the collection vehicle which will process said data.

According to the essence of the invention, since the device includes more than one ultrasound sensor which are suitably distributed, it allows a much more reliable scanning, in this case a scanning of four or more measurements which obtain, by means of software calculations and sequences, a precise measurement of the fill level of the container regardless of whether or not the load contained therein is homogeneously arranged, without being influenced by false readings, such as, for example, readings that bounce off the walls, glass, elements with holes, meshes, etc.

The casing of the device is fixed inside the corresponding container, which can be made of ferric or non-ferric material, where it is plastic, fibre, or any other suitable material in the latter case, such that when the device is placed in a container made of ferric material, the antenna participating in the communication system will be complemented with a protection element made of a non-ferric material.

The circuit established by the communication system between the ultrasound sensors and the control system or console of the collection vehicle consumes minimum energy and the radio-frequency communication system and/or GSM communication system under protocol could be:
- RF: LoRA, Sigfox, LTE, WIFI, etc., adaptable to any commercial protocol.
- GSM: 2G, 3G, GPRS, UMTS, HSPA+, 4G.

The integrated software and hardware allow, on one hand, programming readings, as well as detecting movements of the element on any axis and recording the ambient temperature.

Communications between the device and the control system of the collection vehicle may be direct, through one sensor or the other, or cross communications between an ultrasound sensor, the control device of the collection vehicle and the other ultrasound sensor.

It should also be pointed out that the parameters can be updated locally by an RFID system without having to use radio-frequency or remote communications.

Accordingly, and unlike conventional measuring devices, the device of the invention allows performing monitoring and having the capacity to take a real-time measurement at the time that the control system is installed in the collection vehicle, or where appropriate, in manual systems associated with each operator, it allows sending interrogation requests via RF, such that at that time the ultrasound sensors of the device send to the control system in question all the data accumulated during the previous period of time and the real-time measurement, such that the control system processes said data and informs operators whether or not the container has to be collected, based on three parameters:
a) True fill state in real time.
b) Historical fill evolution.
c) Next planned collection date.

In summary, the device is autonomous and, with multiple volumetric sensor, allows knowing the fill percentage of waste containers in a reliable manner, regardless of the homogeneity with which they are full, or lack thereof, having the capacity to be interrogated with regard to their state at the time of collection from the corresponding vehicle.

This option allows optimising loads by allowing the service to be more efficient, and accordingly more cost-effective, when the service is performed with programmed routes. This allows the possibility of prolonging the route of one or several vehicles, to the point of reducing their number, with the subsequent cost and environmental savings.

In addition to the described advantages and features, the described device has the following characteristics:
- Automatic geopositioning on a map of collection points.
- Fill status of each container.
- Fill history.
- Last measurement of each sensor and reading in real time by interrogation from the collection vehicle.
- Verification of the container collection and/or washing service.
- Internal temperature of the container.
- State of the batteries.
- Real-time tipping or vandalism alarm.
- Fire alarm

### DESCRIPTION OF THE DRAWINGS

To complement the description that will be provided below and for the purpose of helping to better understand the features of the invention according to a preferred practical embodiment thereof, a set of drawings is attached as an integral part of said description in which the following is depicted in an illustrative and non-limiting manner:
Figure 1 shows a bottom perspective view of a device for measuring the fill status of containers according to the object of the present invention.
Figure 2 shows a top perspective view of the device of the preceding figure.
Figure 3 finally shows a longitudinal section view of the device of the preceding figures duly implemented on the wall of the corresponding non-metallic container.
Figure 4 finally shows a cross-section view of the device fixed on the wall of a container made of ferric material.

### PREFERRED EMBODIMENT OF THE INVENTION

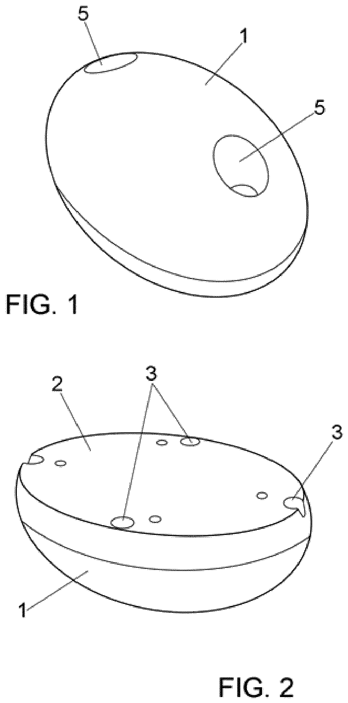

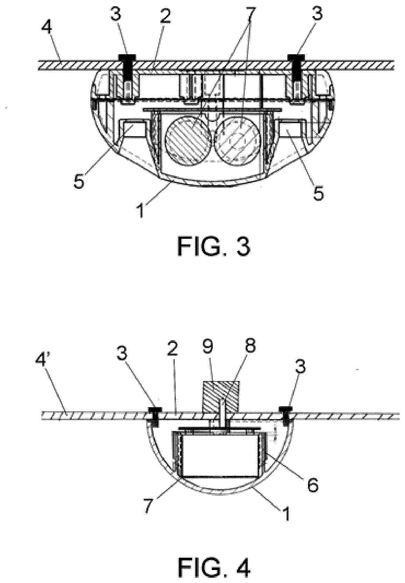

In view of the mentioned figures, and especially Figure 1, it can be observed how the device for measuring the fill status of containers is formed by a casing (1) of material that is resistant both to corrosion and to mechanical stresses, which casing has a flat base (2) through which and by means of the appropriate screws going through holes (3), it is fixed to the wall (4) of a non-metallic container, or to the wall (4') of a container made of ferric material, such that in any event said device or casing (1) includes at least one pair of ultrasound sensors (5) which are suitably distributed, being complemented with a leak-tight compartment (6) for batteries or storage cells (7) where, in the case of the device or casing (1) being mounted on the wall (4') of a ferric container, the antenna (8) of the system will go through said wall so that it does not experience interferences with same, including a protection element (9) made of non-ferric material, as depicted in Figure 4.

The ultrasound sensors (5) will be associated with a printed circuit board integrating a microprocessor and a radio-frequency communication module and/or GSM communication module, not shown in the figures, through which the obtained data is sent to the control system established in the corresponding refuse collection vehicle or portable equipment in question.

The device can likewise incorporate temperature sensors, as well as geolocation and georeferencing means.

## Claims

1. A device for measuring the fill status of containers, provided for preferably being applied in urban waste containers in order to know in real time the fill status of the container, **characterised in that** it is formed by a casing (1) with a high resistance to corrosion and mechanical stresses, in which there are established two or more ultrasound sensors (5) associated with a radio-frequency communication system and/or GSM communication system under a protocol for sending in real time the level of waste inside the container to a system for the control, management and optimisation of the collection of said waste, the device being electrically supplied by means of batteries or storage cells (7) located in a leak-tight openable compartment (6).

2. The device for measuring the fill status of containers according to claim 1, **characterised in that** the electronics of the device incorporate geolocation or georeferencing means.

3. The device for measuring the fill status of containers according to claim 1, **characterised in that** the electronics of the device incorporate at least one temperature sensor and a vandal-proof system.

4. The device for measuring the fill status of containers according to claim 1, **characterised in that** when the casing (1) is to be fixed in the wall of a container made of ferric material, the antenna (8) participating in the communication system is intended to be arranged going through a hole made in said wall, incorporating a guard (9) made of non-ferric material.
